# EUROPÄISCHE PATENTSCHRIFT

(11) **EP 2 337 215 B1**
(45) Veröffentlichungstag und Bekanntmachung des Hinweises auf die Patenterteilung: **25.01.2012**
(21) Anmeldenummer: 09015593.8
(22) Anmeldetag: 17.12.2009
(51) Int. Cl.: H02P 7/295, H02P 25/14

(54) **Verfahren und Vorrichtung zur Steuerung der effektiven Spannung an einem elektrischen Verbraucher**
Method and device for controlling the effective voltage of an electrical consumer
Procédé et dispositif de commande de la tension effective sur un consommateur électrique

(43) Veröffentlichungstag der Anmeldung: 22.06.2011
(73) Patentinhaber: ERGOBIONIK GmbH, 46240 Bottrop (DE)
(72) Erfinder: Klingbeil, Thomas, 46240 Bottrop (DE)
(74) Vertreter: DR. STARK & PARTNER

(56) Entgegenhaltungen:
- DE-A1- 19 518 591
- DE-A1- 19 652 190

## Beschreibung

Die Erfindung betrifft ein Verfahren und eine Vorrichtung zur Steuerung der effektiven Spannung an einem elektrischen Verbraucher, der elektrisch eine Parallelschaltung einer resitiv-induktiven Last und einer Kapazität darstellt.

In der Praxis sind Maschinen, die mit einem Universalmotor an das Stromnetz angeschlossen werden, weit verbreitet. Dies können beispielsweise Hausgeräte , aber auch handgeführte, motorisch angetriebene Elektrowerkzeuge, wie z. B. Schlagbohrmaschinen, Winkelschleifer und Kreissägen sein. Häufig verfügen solche Maschinen über eine Drehzahlstelleinrichtung, mit der eine gewünschte Arbeitsgeschwindigkeit eingestellt werden kann. Dabei sind die Betätigungsmittel der Drehzahlstelleinrichtung üblicherweise an der Maschine angebracht und oft im Bereich des Handgriffs vorgesehen. Aus praktischen und/oder ergonomischen Erwägungen heraus kann es wünschenswert sein, die Drehzahl nicht an der Maschine selber zu verstellen, sondern die Drehzahlstelleinrichtung getrennt von der Maschine anzuordnen. Denn in der Praxis sind häufig Ständer oder Arbeitstische für die jeweiligen Maschinen verfügbar, in welcher die Maschinen einspannbar oder einsetzbar sind. In diesen Fällen ist es vorteilhaft, wenn die Maschine mit einem Fußpedal steuerbar ist.

Solche Vorrichtungen, mit denen die Drehzahl eines am Stromnetz angeschlossenen Universalmotors beeinflussbar ist, sind weit verbreitet, billig und - wie vorerwähnt - häufig Bestandteil der Maschine. Entsprechende Vorrichtungen sind beispielsweise in den Druckschriften DE 195 18 591 A1 und DE 196 52 190 A1 beschrieben, wobei die Drehzahl in diesen Dokumenten durch eine Widerstandsregelung (DE 195 18 591 A1) oder aber durch eine Phasenanschnittssteuerung (DE 196 52 190 A1) erfolgt.

Da der Motor, wie eingangs angegeben, dabei eine komplexe Last mit induktiver Komponente darstellt, kann er vorteilhaft mit einer einfachen Phasenanschnittsteuerung auf der Basis eines Triacs gesteuert werden. Triac und Motor sind in solchen Fällen dann in Reihe geschaltet. Jedoch wird durch die Schaltvorgänge des Triacs und durch das Bürstenfeuer eine Funkstörleistung erzeugt, die von der Maschine ins Stromnetz abgegeben wird. Um diese auf ein erträgliches Maß zu dämpfen, wird parallel zu der Reihenschaltung aus Motor und Triac ein Kondensator geschaltet.

In der Praxis sind Elektrowerkzeuge oft derart, dass der Triac bei voller Drehzahl durch einen Schalter kurzgeschlossen wird, so dass eine Parallelschaltung aus Motor und Kondensator an den Netzanschlüssen anliegt.

Es ist jedoch zu berücksichtigen, dass die Parallelschaltung aus Motor und Kondensator im Einschaltmoment eine komplexe Last mit kapazitivem Charakter darstellt, welche im Einschaltmoment einen Kurzschluss erzeugt, der u. a. den Triac und andere in Reihe geschaltete Komponenten stark belasten oder gar zerstören würde. Auch würden erhebliche Störungen im Netz durch den Kurzschluss verursacht werden.

Eine bekannte Möglichkeit, den Stromanstieg im Einschaltmoment zu begrenzen, besteht darin, eine Spule in Reihe mit der Maschine zu schalten. Bei den üblicherweise verwendeten Entstörkondensatoren von 220 nF bis 470 nF müsste eine solche Spule eine Induktivität von einigen Millihenry aufweisen. Da sie dabei vom vollen Laststrom durchflossen wird, wäre sie groß, unhandlich und würde zudem auch hohe Kosten verursachen.

Eine alternative Möglichkeit zur Schaltung von kapazitiven Lasten sind Phasenabschnittsteuerungen, die im Nulldurchgang der Netzspannung schalten und die Kapazität damit dem Netzspannungsverlauf folgend aufladen und insbesondere hohe Einschaltströme vermeiden. Da beim Abschalten der Maschine die Induktivität des Motors dominiert, führt dies dazu, dass der Strom durch den Motor zunächst aufrecht erhalten wird. Die Phasenabschnittsteuerung wird dann im Abschaltmoment hochohmig, und der Strom entlädt sich in den parallel geschalteten, zur Funkentstörung vorgesehenen Kondensator. Aufgrund der üblicherweise vorgesehenen Dimensionierung von Kondensator und Motor führt dies zu sehr hohen Spannungen, wodurch die Phasenabschnittsteuerung voraussichtlich zerstört würde.

Um Phasenabschnittsteuerungen auch mit induktiven Lasten nutzen zu können, kann parallel zur Last ein geeignet dimensionierter Kondensator geschaltet werden, der den Strom aus dem Motor aufnehmen kann, ohne sich dabei auf eine für die Phasenabschnittsteuerung gefährliche Spannung aufzuladen. Die Dimensionierung des Kondensators ist dabei vom Motor und von seinen Betriebsbedingungen abhängig. Diese Dimensionierung erfordert zum einen entsprechendes Fachwissen bei der Auslegung, zum anderen sind besondere Maßnahmen für den Anschluss des Kondensators zu treffen. Außerdem sind derartige Kondensatoren relativ kostspielig.

Aufgabe der Erfindung ist es, die vorgenannten Nachteile zu vermeiden und ein eingangs genanntes Verfahren und eine Vorrichtung anzugeben, mit dem bzw. der die Steuerung der effektiven Spannung an einem elektrischen Verbraucher, der elektrisch eine Parallelschaltung einer resitiv-induktiven Last und einer Kapazität darstellt, in zufrieden stellender Weise möglich ist.

Diese Aufgabe wird durch das Verfahren in Anspruch 1 und die Vorrichtung in Anspruch 5 gelöst.

Vorteilhafte Ausprägungen des erfindungsgemäßen Verfahrens und der erfindungsgemäßen Vorrichtung sind in den Unteransprüchen angegeben.

Die erfindungsgemäße Phasenanschnittsteuerung zeichnet sich dadurch aus, dass zu Beginn einer Halbwelle das als Triac ausgebildete schaltende Bauteil geöffnet ist. Bei einem bestimmten Phasenwinkel, dem Anschnittwinkel, wird der Triac geschlossen und bleibt für den Rest der Halbwelle geschlossen.

Wegen der Motorinduktivität ist der Strom im Nulldurchgang der Spannung noch nicht Null, sodass der Triac noch etwas länger geschlossen bleiben muss, bis der Nulldurchgang des Stromes erreicht ist. Dann wird er geöffnet und bleibt offen, bis die neue Phase den Anschnittwinkel erreicht hat. Der Triac wird beim Anschnittwinkel gezündet und bleibt solange niederohmig, bis der Strom durch den Triac den Haltestrom, der klein gegenüber dem Betriebsstrom durch den Motor ist, erreicht hat. Bei Unterschreitung des Haltestroms schaltet der Triac ab und bleibt bis zur nächsten Zündung ausgeschaltet. Damit der Triac zum Zündzeitpunkt nicht einen leeren Kondensator mit dem Kurzschlussstrom aufladen muss, wird der Kondensator vorher durch ein weiteres elektronisches Bauteil, dessen Spannungs-Strom-Kennlinie steuerbar ist, auf die gerade anliegende Netzspannung aufgeladen. Dieses Bauteil kann beispielsweise ein Bipolartransistor, ein Feldeffekttransistor oder ein IGBT sein. Es wird so angesteuert, dass der Strom am Ausgang nur langsam ansteigt und dabei den Funkentstörkondensator in der Maschine kontrolliert auflädt. Der Strom kann dabei auf einen Maximalwert begrenzt sein.

Im Folgenden wird ein in der Zeichnung dargestelltes Ausführungsbeispiel der Erfindung erläutert. Es zeigen:
- Fig. 1: eine schematische Darstellung eines Ausführungsbeispiels einer erfindungsgemäßen Vorrichtung, und
- Fig. 2: eine vereinfachte Darstellung des Verlaufs der Netzspannung und des Stroms durch das Elektro- gerät der Fig. 1.

In allen Figuren werden für gleiche bzw. gleichartige Bauteile übereinstimmende Bezugszeichen verwendet.

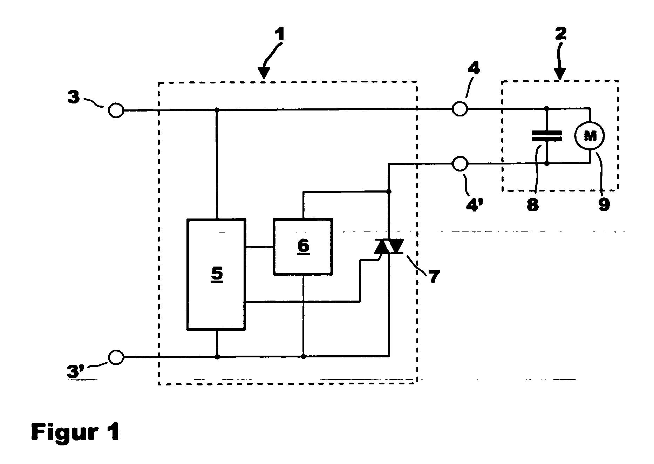

Figur 1 zeigt in schematischer Darstellung eine erfindungsgemäße, als Drehzahlsteller ausgebildete erfindungsgemäße Vorrichtung 1, die über die Anschlussklemmen 3, 3' an das öffentliche Wechselstromnetz angeschlossen ist. Ober Anschlussklemmen 4, 4' ist ein elektrischer Verbraucher 2 an die Vorrichtung 1 angeschlossen, welcher eine Parallelschaltung aus einem Motor 9 und einem Kondensator 8 enthält.

Die Vorrichtung 1 umfasst eine Steuereinrichtung 5, eine erste Schaltvorrichtung 6 und eine als Triac 7 ausgebildete zweite Schaltvorrichtung. Dabei enthält die erste Schaltvorrichtung 6 als schaltendes Bauteil einen Bipolartransistor, einen Feldeffekttransistor oder einen IGBT.

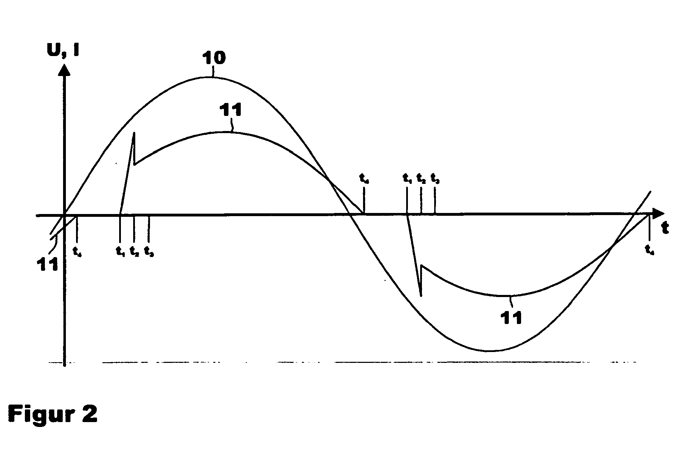

Figur 2 zeigt vereinfacht den Verlauf der Netzspannung 10 und den Verlauf des Stromes 11 durch den elektrischen Verbraucher 2. Zum Zeitpunkt t1 wird die erste Schaltvorrichtung 6 angesteuert, die den Strom 11 durch den elektrischen Verbraucher 2 langsam steigert. Zum Zeitpunkt t2 ist der Kondensator 8 auf den aktuellen Wert der Netzspannung 10 aufgeladen und der Strom 11 sinkt auf den Wert, der von jetzt an im Wesentlichen durch den Motor 9 bestimmt wird. Zum Zeitpunkt t3 wird der Triac 7 gezündet und übernimmt den Strom 11, der bislang durch die erste Schaltvorrichtung 6 geflossen ist. Nachdem der Triac 7 eingerastet ist, wird die erste Schaltvorrichtung 6 abgeschaltet. Zum Zeitpunkt t4 erreicht der Strom 11 durch den elektrischen Verbraucher 2 die Nulllinie und der Triac 7 schaltet ebenfalls ab. Damit ist ein Zyklus beendet.

Zusammengefasst betrifft die Erfindung ein Verfahren und eine Vorrichtung 1, um mit einer Phasenanschnittsteuerung den Strom 11 mit Hilfe eines aktiven Bauelementes zunächst kontrolliert ansteigen zu lassen, bis der Funkentstörkondensator in der Last geladen ist, um dann auf einen Triac 7 als Schaltelement umzuschalten, da diese vorteilhaft bei induktiven Lasten wie Motoren eingesetzt werden können.

## Patentansprüche

1. Verfahren zur Steuerung der effektiven Spannung an einem elektrischen Verbraucher (2), der elektrisch eine Parallelschaltung aus einem Motor (9) und einem Kondensator (8), insbesondere in Form eines Funkentstörkondensators, darstellt, **dadurch gekennzeichnet, dass** durch eine Steuereinrichtung (5) entsprechend einer Führungsgröße zum einen eine Schaltvorrichtung (6) so angesteuert wird, dass sie den Strom (11) durch den elektrischen Verbraucher (2) zum zumindest teilweisen Laden des Kondensators (8) kontrolliert ansteigen lässt, und durch die Steuereinrichtung (5) zum anderen ein Triac (7) zum Zwecke der Phasenanschnittsteuerung betrieben und beim Anschnittwinkel gezündet wird und dabei den Strom (11) durch den elektrischen Verbraucher (2) übernimmt, wobei die Steuereinrichtung (5) die Schaltvorrichtung (6) nach dem Einrasten des Triacs (7) abschaltet und wobei der Triac (7) erst dann gezündet wird, wenn der Kondensator (8) auf die anliegende Netzspannung (10) aufgeladen worden ist.

2. Verfahren nach dem vorhergehenden Anspruch, **dadurch gekennzeichnet, dass** als Schaltvorrichtung (6) ein Bipolartransistor, insbesondere ein IGBT (Bipolartransistor mit isolierter Gate-Elektrode), oder ein Feldeffekttransistor verwendet wird.

3. Verfahren nach einem der vorhergehenden Ansprüche, **dadurch gekennzeichnet, dass** die Führungsgröße fest oder veränderbar voreingestellt ist.

4. Verfahren nach einem der vorhergehenden Ansprüche, **dadurch gekennzeichnet, dass** die Führungsgröße durch einen Benutzer zur Leistungs- und/oder Drehzahlbeeinflussung des elektrischen Verbrauchers (2) veränderbar ist.

5. Vorrichtung (1) zur Steuerung der effektiven Spannung an einem elektrischen Verbraucher (2), der elektrisch eine Parallelschaltung aus einem Motor (9) und einem Kondensator (8), insbesondere in Form eines Funkentstörkondensators, darstellt, **dadurch gekennzeichnet, dass** die Vorrichtung eine Schaltvorrichtung (6), einen Triac (7) sowie eine Steuereinrichtung (5) zur Ansteuerung der Schaltvorrichtung (6) und zum Betreiben eines Triacs (7) zum Zwecke der Phasenanschnittsteuerung umfasst, wobei die Steuereinrichtung (5) entsprechend einer Führungsgröße zum einen die Schaltvorrichtung (6) so ansteuert, dass sie den Strom (11) durch den elektrischen Verbraucher (2) zum zumindest teilweisen Laden des Kondensators (8) kontrolliert ansteigen lässt, und durch die Steuereinrichtung (5) zum anderen den Triac (7) beim Anschnittwinkel zündet und dabei den Strom (11) durch den elektrischen Verbraucher (2) übernimmt, wobei die Steuereinrichtung (5) die Schaltvorrichtung (6) nach dem Einrasten des Triacs (7) abschaltet und wobei der Triac (7) erst dann gezündet wird, wenn der Kondensator (8) auf die anliegende Netzspannung (10) aufgeladen worden ist.

6. Vorrichtung (1) nach dem vorhergehenden Anspruch, **dadurch gekennzeichnet, dass** die erste Schaltvorrichtung (6) als ein Bipolartransistor, insbesondere ein IGBT (Bipolartransistor mit isolierter Gate-Elektrode) oder ein Feldeffekttransistor ist.

7. Vorrichtung (1) nach einem der vorhergehenden Ansprüche 5 oder 6, **dadurch gekennzeichnet, dass** die Führungsgröße fest oder veränderbar voreingestellt ist.

8. Vorrichtung (1) nach einem der vorhergehenden Ansprüche 5, 6 oder 7, **dadurch gekennzeichnet, dass** die Führungsgröße durch einen Benutzer zur Leistungs- und/oder Drehzahlbeeinflussung des elektrischen Verbrauchers (2) veränderbar ist.

## Claims

1. Method for controlling the effective voltage of an electrical consumer (2) which, electrically, constitutes a parallel connection of a motor (9) and a capacitor (8), especially in the form of a radio interference suppression capacitor, **characterised in that**, on the one hand, a switching device (6) is selected by a control device (5) according to a command variable such that it effects a controlled increase in the current (11) through the electrical consumer (2) for the at least partial charging of the capacitor (8) and, on the other hand, a triac (7) is operated by the control device (5) for the purpose of phase-angle control and ignited at the lead angle and thereby accepts the current (11) through the electrical consumer (2), wherein the control device (5) switches off the switching device (6) after the latching of the triac (7) and wherein the triac (7) is only ignited if the capacitor (8) has been charged up to the mains voltage (10) applied.

2. Method according to the preceding claim, **characterised in that** a bipolar transistor, especially an IGBT (bipolar transistor with insulated gate electrode), or a field effect transistor is used as a switching device (6).

3. Method according to one of the preceding claims, **characterised in that** the command variable has a fixed or changeable preset value.

4. Method according to one of the preceding claims, **characterised in that** the command variable can be changed by a user in order to affect the performance and/or rotational speed of the electrical consumer (2).

5. Device (1) for controlling the effective voltage of an electrical consumer (2) which, electrically, constitutes a parallel connection of a motor (9) and a capacitor (8), especially in the form of a radio interference suppression capacitor, **characterised in that** the device comprises a switching device (6), a triac (7) as well as a control device (5) for selecting the switching device (6) and for operating a triac (7) for the purpose of phase-angle control, wherein the control device (5) on the one hand selects the switching device (6) according to a command variable such that it effects a controlled increase in the current (11) through the electrical consumer (2) for the at least partial charging of the capacitor (8) and, on the other hand, ignites the triac (7) through the control device (5) at the lead angle and thereby accepts the current (11) through the electrical consumer (2), wherein the control device (5) switches off the switching device (6) after the latching of the triac (7) and wherein the triac (7) is only ignited if the capacitor (8) has been charged up to the mains voltage (10) applied.

6. Device (1) according to the preceding claim, **characterised in that** the first switching device (6) is a bipolar transistor, especially an IGBT (bipolar transistor with insulated gate electrode), or a field effect transistor.

7. Device (1) according to one of the preceding claims 5 or 6, **characterised in that** the command variable has a fixed or changeable preset value.

8. Device (1) according to one of the preceding claims 5, 6 or 7, **characterised in that** the command variable can be changed by a user in order to affect the performance and/or rotational speed of the electrical consumer (2).

## Revendications

1. Procédé de commande de la tension effective à un consommateur électrique (2) qui constitue électriquement un circuit parallèle formé d'un moteur (9) et d'un condensateur (8), en particulier sous la forme d'un condensateur d'antiparasitage, **caractérisé en ce que**, d'une part, un dispositif de commutation (6) est commandé par un dispositif de commande (5) en fonction d'une grandeur de conduite de façon qu'il laisse augmenter de manière contrôlée le courant (11) à travers le consommateur électrique (2) pour charger au moins partiellement le condensateur (8) et, d'autre part, un triac (7) est activé par le dispositif de commande (5) pour la commande par angle de phase et amorcé à l'angle d'amorçage, absorbant ce faisant le courant (11) à travers le consommateur électrique (2), le dispositif de commande (5) désactivant le dispositif de commutation (6) après l'enclenchement du triac (7) et le triac (7) n'étant amorcé que si le condensateur (8) a été chargé à la tension secteur (10) appliquée.

2. Procédé selon la revendication précédente, **caractérisé en ce qu'**un transistor bipolaire, en particulier un IGBT (transistor bipolaire à grille isolée) ou un transistor à effet de champ est utilisé comme dispositif de commutation (6).

3. Procédé selon une des revendications précédentes, **caractérisé en ce que** la grandeur de conduite est préréglée de manière fixe ou modifiable.

4. Procédé selon une des revendications précédentes, **caractérisé en ce que** la grandeur de conduite est modifiable par un utilisateur pour influencer la puissance et/ou la vitesse de rotation du consommateur électrique (2).

5. Dispositif (1) de commande de la tension effective à un consommateur électrique (2) qui constitue électriquement un circuit parallèle formé d'un moteur (9) et d'un condensateur (8), en particulier sous la forme d'un condensateur d'antiparasitage, **caractérisé en ce que** le dispositif comprend un dispositif de commutation (6), un triac (7) et un dispositif de commande (5) pour commander le dispositif de commutation (6) et pour activer le triac (7) pour la commande par angle de phase, le dispositif de commande (5) commandant, d'une part, le dispositif de commutation (6) en fonction d'une grandeur de conduite de façon qu'il laisse augmenter de manière contrôlée le courant (11) à travers le consommateur électrique (2) pour charger au moins partiellement le condensateur (8) et amorçant, d'autre part, le triac (7) à l'angle d'amorçage, lequel absorbe ce faisant le courant (11) à travers le consommateur électrique (2), le dispositif de commande (5) désactivant le dispositif de commutation (6) après l'enclenchement du triac (7) et le triac (7) n'étant amorcé que si le condensateur (8) a été chargé à la tension secteur (10) appliquée.

6. Dispositif (1) selon la revendication précédente, **caractérisé en ce que** le premier dispositif de commutation (6) est un transistor bipolaire, en particulier un IGBT (transistor bipolaire à grille isolée) ou un transistor à effet de champ.

7. Dispositif (1) de commande selon une des revendications précédentes 5 ou 6, **caractérisé en ce que** la grandeur de conduite est préréglée de manière fixe ou modifiable.

8. Dispositif (1) de commande selon une des revendications précédentes 5, 6 ou 7, **caractérisé en ce que** la grandeur de conduite est modifiable par un utilisateur pour influencer la puissance et/ou la vitesse de rotation du consommateur électrique (2).
